Europäisches Patentamt

(19) European Patent Office

Office européen des brevets

(11) Publication number: **0 036 395**
**B1**

## (12) EUROPEAN PATENT SPECIFICATION

(45) Date of publication of patent specification: **18.07.84**

(21) Application number: **81830038.6**

(22) Date of filing: **12.03.81**

(51) Int. Cl.³: **F 16 B 12/52,**
**A 47 B 13/02, A 47 C 7/00**

(54) An expansion locking device for a carrying structure including a column and radially extending arm members and foot members for articles of furniture.

(30) Priority: **18.03.80 IT 4819480**

(43) Date of publication of application:
**23.09.81 Bulletin 81/38**

(45) Publication of the grant of the patent:
**18.07.84 Bulletin 84/29**

(84) Designated Contracting States:
**AT BE CH DE FR GB LI LU NL SE**

(56) References cited:
**FR - A - 2 388 526**
**US - A - 4 117 784**

(73) Proprietor: **CASTELLI S.P.A.**
**Via Torreggiani 1**
**Bologna (IT)**

(72) Inventor: **Ponzellini, Giulio**
**Via di Siepelunga 38/3**
**I-40141 Bologna (IT)**

(74) Representative: **Fiammenghi, Carlo et al,**
**c/o Fiammenghi-Fiammenghi Via Quattro**
**Fontane, No. 31**
**I-00184 Roma (IT)**

Courier Press, Leamington Spa, England.

## Description

The present invention relates to an expansion locking device for a carrying structure for supporting, for instance, a table top plate of a disassemblable table, a shelf, a container, or other disassemblable articles of furniture.

Locking devices are already known for locking a plurality of radially outwardly directed arm and/or foot members of a carrying structure to a vertical column.

The arm and/or foot members of the known structures of a first type are constructed so as to be made integral to each other and the connection of each of said units to the upper and/or lower end of the column is obtained by a screw connection or by means of bolts, screws or the like. This solution presents the inconvenience that the unit of arm members as well as the unit of foot members become very heavy and thus difficult to be handled, causing difficulties in the assembly and disassembly operations, also having a high liability to the damage of the treaded portions.

The arm and foot members of a carrying structure according to a second solution, which is the object of US—A—4117784, are constructed as independent bodies, which have to be fastened in a disassemblable manner to the one or the other end of a vertical column.

This problem has been solved by employing a locking device, comprising clamping means arranged at the inner ends of the arm and foot members and to be engaged inside clamping seats provided at the ends of the column.

This solution requires the provision at the ends of the column, of inserted pieces which have to be differently shaped, i.e. which include so many clamping seats as is the number of the arm and foot members respectively. That causes a remarkable increase of the manufacturing cost. Additionally a very high accuracy between the cooperating clamping surfaces is required in order to prevent oscillations of the arm and foot members, which could produce the instability of the article of furniture and/or a non-perfect horizontality of a table-top plate or a shelf or the like supported by the carrying structure.

According to a third solution which is the object of FR—A—2388526, the independent arm and foot members are connected to the respective end of a vertical column by means of an expansion locking device, acting from the inside on the inner sector-like ends of the arm and foot members, said device comprising at least a body adapted to uniformly enlarge itself in radial directions and which is made of an elastomeric material, said body being placed between two washers mounted on a threaded rod, in such a manner that as the rod is caused to rotate, the washers are caused to approach to one another tightening therebetween the resilient body and causing the radial expansion thereof so that this latter applies radial pressures on said sector-like elements on a zone placed inside the hollow end portions of the column. But such an elastomeric body, provided for ensuring the locking between the aforesaid parts, shortly loses its elasticity and the locking action will become quickly inefficient. In one embodiment of this third solution a rigid frusto-conical body, having its greatest base towards the inner portion of the threaded rod, is used for the expansion.

The expansion locking device according to this invention comprises a threaded bolt having an enlarged head which rests on the upper or lower parts respectively of the inner elements of a plurality of arm members and foot members which are shaped as sectors of a cylinder having an axial conical hole, said sector-like elements' being designed to be partially inserted inside the hollow ends of a vertical column so as to define together, in combination, a conical hole inside of which will be received the said threaded bolt which is screwed in a conical body made of a rigid material, metal, for instance, and which is tapered corresponding to the conical surface defined in combination by the hole sectors provided in the sector-like inner elements of the arm and foot members, so that by screwing the bolt, said conical body is urged to advance into the said conical hole, causing the sector-like elements to be pressed against the inner surface of the column. On the outer surface of each sector-like element of each arm member, below its upper end and on the outer surface of each sector-like element of each foot member over the lower end thereof a partial annular outer shoulder is provided so that a portion of said sector-like element has an outer diameter equal to the outer diameter of the column, while the remaining portion has a diameter adapted to be fitted inside the said column, so that, as the locking device becomes operative, the respective washer urges the sector-like elements to abut against the upper and the lower edge respectively of the column. Means are provided in order to prevent any rotation of the locking device with respect to the sector-like elements of the arm and foot members respectively. The arm members and foot members may by in a number of "n" or less, when the sector-like elements are constructed with an annular amplitude slightly less than 360° :n. When the number of arm members or foot member is less than "n", spacers are used to complete the angle of 360°, said spacers being shaped as the inner sector-like elements of the arm or foot members.

This solution has the advantage to permit the use of a locking device very simple, inexpensive to be produced, of very long life and very lightweight, so that the respective piece of furniture becomes little expensive to be produced and also very lightweight. A further advantage of the locking device of the present invention with respect to the known ones consists in the fact that only few parts are necessary for cooperating in the locking operation. Very important in the device of this invention is the absence of elastomeric bodies which in short time can be damaged, thus causing locking deficiences and difficulties in the disassembling operations. The locking device of the invention has also a high efficiency since the locking effect is due only to the particular configuration of the conical body in the form of a cone, equal to that of the cavity designed to receive this latter, ensuring a clamping effect similar to that of the mandrels on tools.

These and other characteristics and advantages of the present invention will be better understood from the following specification of some embodiments of the expansion locking device shown in the accompanying drawings, in which:

Fig. 1 is a partial axial section of the first embodiment of the locking device applied to a disassemblable table, in which the carrying structure includes a single column, a plurality of arm members and a plurality of foot members, the outer portions of these latter having been broken away;

Fig. 2 is a perspective view of a spacer according to this invention;

Figs. 3 and 4 are the partial axial sections of two variants of the expansion locking device cooperating with the arm members;

Fig. 5a is the horizontal cross section taken on the line I—I of Fig. 4; and

Figs. 5b and 5c are similar cross sections, when three and two arm members are employed together with the respective spacers.

Referring to the drawings at 1 is marked a, threaded bolt or rod having an enlarged head 1a, the inner end of which is engaged in an axial threaded hole of a frusto-conical body 2, made of a rigid material, in particular metal. Said body 2 is shaped as a cone so that each generatrix thereof is set at an angle of about 3° to the longitudinal axis of said body 2, which will become also the axis of the vertical column 5, at least the end portions of which are hollow. 3 and 4 indicate the arm members and the foot members respectively which are parts of the carrying structure of the piece of furniture, as for instance, a disassemblable table. The inner end portions of the arm and foot members 3 and 4 are shaped as sector-like elements of a cylinder having a conical axial hole tapered corresponding to the outer side surface of the body 2. The parts of the sector-like end elements of each arm member 3 are indicated with the number 3 accompanied by a letter; accordingly the number 4, accompanied by the same letters, will be used for indicating the operatively identical parts of the inner sector-like portions of the foot members 4.

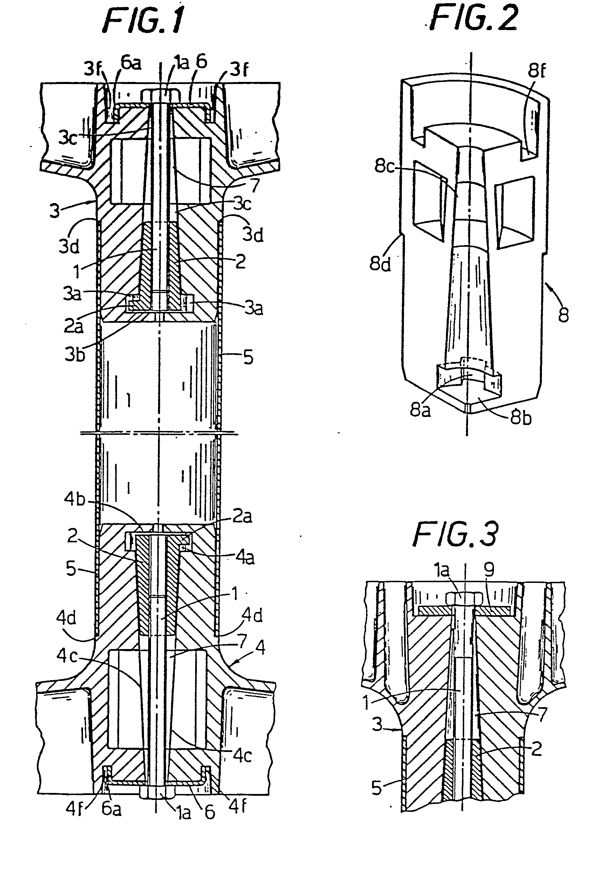

For this reason only the features of a sector-like element of an arm member 3 engaged in the upper hollow end of the column 5 will now be described. Said inner sector-like element of each arm member 3 is provided with a hole in the form of a cone sector; each of the inner elements of the arm members 3 has an amplitude of $(360°:n)$—a, where "n" in the shown embodiments is equal to 4 and "a" is a very small angle adapted to create a gap between the sector-like elements and the spacers 8 or 11. These latter will substitute one or more of the sector-like elements in the event that only three, two or one arm members 3 are used, as in the case in which two or more carrying structures are used in a piece of furniture, as, for instance, a disassemblable table, the table top plate of which is supported by one, two or three columns 5 respectively. Said gap must be sufficient to allow the inner sector-like elements to be pressure locked against the inner surface of the upper end portion of the column 5. On the outer surface of each sector-like element of each arm member 3, below its upper end a partial annular outer shoulder 3d is provided so that the upper portion of the sector like element has an outer diameter equal to that of the column 5 while the remaining portion has a diameter adapted to be fitted inside the column 5. The partial annular shoulders 3d and those 8d of the optional spacers 8 or 11 form together an annular shoulder, by means of which the plurality of inner sector-like elements of the arm members 3 and spacers 8 or 11 abut against the upper edge of the column 5. From the outer surface of the body 2 extends radially outwardly a tooth 2a, while a radial recess 3a is provided in the inner surface 3c of each sector-like element of each arm 3, said recess 3a being adapted to receive the tooth 2a, thus preventing any mutual rotation between the inner sector-like elements and the body 2, while the height of said recess 3a is greater than the height of the tooth 2a so as to allow an axial displacement of the body 2 with respect to the sector-like elements so that the body 2 can approach the head 1a of the threaded bolt 1, as this latter is screwed, causing the body 2 to enter the cavity 7 and to radially urge the inner sector-like elements of the arm members 3 and optionally of the spacers 8 or 11 against the inner surface of the column 5. The head 1a of the bolt 1 rests on the upper parts of the sector-like elements of the arm members 3 and optionally of the spacers 8 or 11 with the interposition of a washer. According to the embodiment shown in Fig. 1, a washer 6 having a peripheral edge 6a bent downwardly by 90° is mounted about the bolt 1 below its head 1a and rests on the bottom of a recess arranged at the upper part of the inner sector-like elements of the arm members 3, and spacers 8 or 11, said recess having a depth such that the head 1a is placed below the level of the plurality of arm members 3, so that they can support the table top plate in the case of a disassemblable table. On the bottom of said recess in each sector-like element is provided a partial annular groove 3f which together with the grooves 3f of other similar sector-like elements forms an annular channel against the bottom of which abuts the washer edge 6a when the locking device is brought in its operative condition. In fact as the rod or bolt 1 is screwed, the conical body 2 is caused to enter the tapered cavity 7 so that radial pressures are applied on the sector-like elements which are locked against the inner surface of the upper end of the column 5. At the same time the washer 6 with its peripheral edge 6a presses said sector-like elements axially downwardly, so that the partial annular shoulders 3d abut with force against the upper edge of the column 5.

The plurality of the sector-like elements of the foot members 4 and the locking device cooperating therewith are operatively identical so that they will not be described in detail.

Each spacer 8 of Fig. 2 is shaped as the inner sector-like elements of arm and foot members 3 and 4 so that the parts operatively identical are marked with the number 8 accompanied by the same letters of the similar parts of the arm and foot members 3, 4.

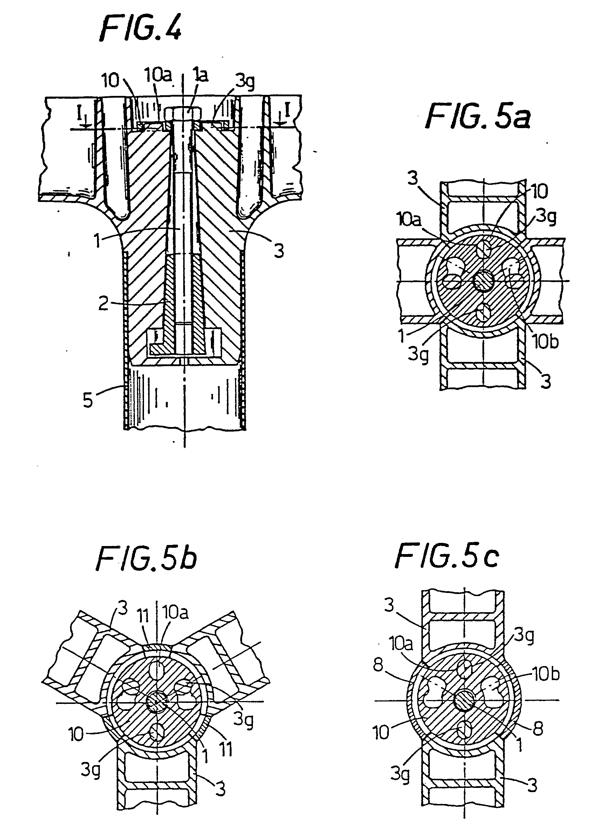

The embodiments shown in Figs. 3 and 4 are variants of the preceding one. In particular the washer in the variant of Fig. 3 is a simple disc 9 which transmits a pressure to the whole bottom of the recess, arranged in the upper part of the sector-like element of the arm members 3 or spacers 8, as the bolt 1 will be screwed to the conical body 2, which has been only partially shown in Fig. 3.

In the variant of Fig. 4 the washer is a disc 10 through which are arranged a set of simple holes 10a and a set of twin holes 10b, the axes of said holes being equally spaced apart from the axis of the disc 10. Said axes are angularly spaced apart from each other so that the holes 10a and/or 10b be each able to receive a tooth 3g having the same cross section as that of each hole 10a or 10b and extending upwardly from the bottom portion of the partial recess arranged on each sector-like element of the arm members 3. Therefore, said teeth 3g and the holes 10a, 10b serve to ensure an exact positioning of the arm members 3 in the cases when, for instance, each sector-like element has an angular amplitude slightly less than 90° and four arm members 3 are used (Fig. 5a), or three arm members 3 and three spacers 11 are used (Fig. 5b), or two arm members 3 and two spacers 8 are used (Fig. 5c).

## Claims

1. An expansion locking device for a carrying structure comprising at least a column (5) which is hollow at least in its ends; a plurality of independent and radial arm members (3) and a plurality of independent and radial foot members (4), each of said arm and foot members having the inner end portion in the form of a sector of a cylinder having tapered axial hole (7) and being adapted to be partially received in the inside of the hollow end portion of the column together with other sector-like elements, which the insertion of spacers (8, 11), if required, said locking device comprising a threaded bolt (1) having an enlarged head (1a) which by means of a washer (6, 9, 10) rests on the upper ends of the inner sector-like elements of the arm members or on the lower ends of the inner sector-like elements of the foot members respectively, each sector-like element having an outer annular partial shoulder (3d, 4d) by means of which said sector-like elements of the arm members and foot members abut against the upper or lower end of the column respectively, said bolt (1) being screwed at its inner portion in an axial threaded hole of a rigid frusto-conical body (2) having its greatest base towards the inner portion of this bolt, characterized in that the tapered hole (7) formed by the axial hole sectors of the inner sector-like elements of the arm members (3) and foot members (4) respectively is tapered to correspond to the outer surface of the body (2), and in that means (2a, 3a) are provided to prevent any rotary movements of the body (2) with respect to the arm or foot members (3, 4), but enabling the body (2) to move to and from the head (1a) along the bolt (1) cooperating therewith as the bolt is screwed.

2. A locking device according to claim 1, wherein the means for preventing rotary movement of the body (2) with respect to the arm members (3) or foot members (3) or foot members (4), but enabling axial mutual movements, comprises a tooth (2a) extending outwardly radially from the body (2), and a partial annular coaxial recess (3a, 4a) arranged in the inner surface (3c, 4c) of the inner sector-like elements of the arm and foot members (3, 4) near their inner ends, each recess (3a, 4a) being provided substantially at the same level as that of the tooth (2a), and having in plan a shape adapted to receive the tooth (2a), but its height being greater than that of the tooth (2a) so as to enable axial movements of the body (2) up to its locking position with respect to the sector-like elements locked by the locking device, and wherein at the upper part of each of the sector-like elements of the arm and foot members (3, 4) and of the spacers (8, 11) a partial sector-like recess is provided adapted to form in combination a recess to house the washer (6, 9, 10) as well as the bolt head (1a).

3. A locking device according to claim 1, wherein the washer (6) has a peripheral edge (6a) bent by 90° with respect to the washer plane, and wherein on the bottom of said recess a partial annular groove (3f, 4f) is arranged so as to define, together with the other grooves (3f, 4f), an annular channel to receive the peripheral washer edge (6a).

4. A locking device according to claim 1, wherein the washer has the form of a disc (9).

5. A locking device according to claim 1, wherein the washer (10) is a disc which is provided with single through holes (10a) and or twin holes (10b) having axes equally spaced apart from the washer axis, said axes being angularly spaced apart to each other so that each hole is able to receive a vertical complementary tooth (3g, 4g) extending outwardly from the bottom of the recess arranged in the sector-like elements of the arm and foot members (3, 4), so as to duly position the arm or foot members (3, 4) according to the numbers of arm and foot members (3, 4) used in a carrying structure, with the interposition of the necessary spacers (8, 11).

6. A locking device according to claim 1, wherein the carrying structure is that of a disassemblable table, the table top of which is supported by at least one such carrying structure.

## Revendications

1. Dispositif pour le verrouillage expansible d'une structure portante comprenant au moins une colonne (5) qui est creuse au moins à ses extrémités et des éléments sous forme de bras (3) et de pieds (4) s'étendant radialement chacun de dits bras et pieds ayant le portion intérieure d'extremité en forme de secteur cylindrique ayant un trou axial conique (7) et étant apte à être partiellement logé dans la portion creuse d'extrémité de la colonne avec des autres elements sous forme de secteur et avec des pièces d'écartement eventuelles (8, 11), ce dispositif de blocage comportant un boulon fileté (1) ayant une tête élargie (1a), qui, à l'aide d'une rondelle (6, 9, 10) s'appuie sur les extrémités supérieures des éléments sous forme de secteur des bras ou respectivement sur les extrémités inférieures des éléments intérieurs sous forme de secteur des pieds, chaque élément sous forme de secteur ayant un épaulement extérieur annulaire partiel (3d), à l'aide duquel chaque élément sous forme de secteur des bras et des pieds va abuter contre l'extrémité supérieure ou respectivement inférieure de la colonne, ce boulon (1) étant vissé pour sa portion intérieure dans un trou fileté d'un corps rigide sous forme d'un tronc de cône (2) ayant sa base plus grande tournée du côté de la portion intérieure de ce boulon, caractérisé en ce que le trou conique (7) formé par les secteurs d'un trou axial des éléments intérieurs sous forme de secteur des bras (3) et respectivement des pieds (4) est effilé de manière correspondante à la surface extérieure du corps (2), et en ce que des moyens sont prévus afin d'empêcher toutes les rotations du corps (2) par rapport aux bras ou pieds (3, 4), neant-moins permettant que le corps (2) puisse s'approcher ou s'éloigner de la tête (1a) le long du boulon (1), en co-opérant avec celui-ci, lorsque le boulon est vissé.

2. Dispositif de verrouillage suivant la revendication 1, caractérisé en ce que les moyens qui empêchent la rotation du corps (2) par rapport aux bras (3) ou aux pieds (4), mais qui permettent les mouvements axiaux mutuels, comportent une dent radiale (2a) qui fait saillie vers l'extérieur du corps (2) et une cavité coaxiale partielle (3a, 4a) arrangée dans la surface intérieure (3c, 4c) des éléments sous forme de secteur des bras et des pieds (3, 4) à proximité de leurs extrémités intérieures, chaque cavité (3a, 4a) étant placée essentiellement au même niveau de la dent (2a) et ayant en plan une forme apte à recevoir la dent (2a), tandis que son hauteur est plus grande que celle de la dent (2a), afin de permettre les mouvements axiaux du corp (2) jusqu'à sa position de blocage par rapport aux éléments sous forme de secteur, bloqués par le dispositif de blocage, et en ce que à l'extremité supérieure de chacun des éléments sous forme de secteur des bras et des pieds (3, 4) et des pièces d'écartement (8, 11) est prévue une cavité partielle sous forme de secteur apte à former, en combinaison, une cavité pour le logement d'une ròndelle (6, 9, 10) ainsi que de la tête (1a) du boulon.

3. Dispositif de verrouillage suivant la revendication 1, caracterisé en ce que la rondelle (6) a un bord périphérique (6a) replié à 90° par rapport au plan de la rondelle, et en ce que sur le fond de cette cavité est ménagée une rainure annulaire partielle (3f, 4f) afin de constituer avec les autres rainures (3f, 4f) une gorge annulaire pour recevoir le bord périphérique (6a) de la rondelle.

4. Dispositif de verrouillage suivant la revendication 1, caracterisé en ce que la rondelle a la forme d'un disque (9).

5. Dispositif de verrouillage suivant la revendication 1, caracterisé en ce que la rondelle (10) est un disque qui est muni de trous passants simples (10a) et/ou de trous jumeaux (10b), dont leurs axes sont écartés également de l'axe de la rondelle, les dits axes étant angulairement écartés l'un de l'autre de manière que chaque trou peut recevoir une dent verticale complémentaire (3g, 4g) qui s'étend vers l'extérieur du fond de la cavité ménagée dans les éléments sous forme de secteur des bras et des pieds (3, 4) afin d'établir correctement la position des bras et des pieds (3, 4) suivant le nombre des bras et des pieds (3, 4), utilisés dans la structure portante, avec l'interposition des pièces d'écartement (8, 11) nécessaires.

6. Dispositif de verrouillage suivant la revendication 1, caracterisé en ce que la structure portante est celle d'une table démontable, dont la plaque formant le plateau est supportée par, au moins, une des structure portantes susditès.

## Patentansprüche

1. Vorrichtung zur dehnbaren Abriegelung eines tragenden Aufbaus, enthaltend: mindestens eine Säule (5), die wenigstens an ihren beiden Enden hohl ist; eine Vielzahl von unabhängigen, sich strahlenförmig erstreckenden, armförmigen und fussförmigen Gliedern (3 und 4), wobei der innere Endbereich von jedem armförmigen und fussförmigen Gliedzylindersektorförmig ausgebildet und mit einer konischen Axialbohrung (7) versehen ist, und falls erforderlich die hohlen Enden der Säule die inneren zylindersektorförmigen Endbereiche von jedem Glied unter Zwischenschieben von Abstandsstücken (8, 11) aufnehmen können; ein Gewindebolzen (1) mit ausgeweitetem Kopf (1a), der durch Scheiben (6, 9, 10) auf den oberen Enden der inneren zylindersektorförmigen Endbereiche von den armförmigen Gliedern bzw. auf den unteren Enden der inneren zylindersektorförmigen Endbereiche von den fussförmigen Gliedern aufliegt, wobei jeder zylindersektorförmige Endbereich der arm- bzw. fussförmigen Glieder einen ringförmigen, hinausragenden Absatzabschnitt (3d) aufweist, der auf dem oberen bzw. unteren Ende der Säule aufliegt, und der obengenannte Gewindebolzen (1) mit seinem inneren Teil in eine axiale Gewindebohrung eines starren Kagelstumpfes (2) angeschraubt ist, dessen Grundfläche auf den inneren Teil des Gewindebolzens gerichtet ist, dadurch gekennzeichnet, dass die die konische Bohrung (7), die aus durchborten Abschnitten der inneren, zylindersektorförmigen Endbereiche von den arm- bzw. fussförmigen Gliedern (3 bzw. 4) besteht, derart ausgebildet ist, dass sie sich der Aussenfläche des Kegelstumpfes (2) anpasst, und dass Mittel (2a, 3a) vorgesehen sind, die eine Drehbewegung des Kegelstumpfes (2) in Bezug auf die arm- bzw. fussförmigen Glieder (3, bzw. 4) verhindern, aber beim Anschrauben des Bolzens eine Bewegung des Kegelstumpfes (2) den Bolzen (1) entlang gegen den Bolzenkopf (1a) ermöglichen.

2. Vorrichtung zur Abriegelung nach Anspruch 1, dadurch gekennzeichnet, dass die die Drehbewegungen des Kegelstumpfes (2) in Bezug auf die arm- bzw. fussförmigen Glieder (3, bzw. 4) verhindernden, aber die gegenseitigen, axialen Bewegungen ermöglichenden Mittel je einen sich radial nach aussen von dem Kegelstumpf (2) erstreckenden Nocken (2a) und einen koaxialen, ringförmigen, in der Innenfläche (3c, 4c) des inneren, zylindersektorförmigen Endbereiches von den arm- bzw. fussförmigen Gliedern (3, bzw. 4) an deren inneren Enden ausgeschnittenen Hohlraum (3a, 4a) aufweisen, wobei jeder Hohlraum (3a, 4a) sich im wesentlichen auf gleicher Höhe wie der Nocken (2a) befindet und im Grundriss eine zur Nockenaufnahme dienende und eine grössere Höhe als der Nocken (2a) aufweisende Form hat, so dass Bewegungen in axialer Richtung des Kegelstumpfes (2) bis zu dessen Abriegelung in Bezug auf die zylindersektorförmigen Endbereiche ermöglicht werden, und dass sich zylindersektorförmige Hohlraumausschnitte an dem oberen Teil jedes zylindersektorförmigen Endbereiches von den arm- bzw. fussförmigen Gliedern (3, bzw. 4) bzw. jedes Abstandsstückes (8, 11) befinden, welche einen die Scheiben (6, 9, 10) sowie den Bolzenkopf (1a) aufnehmenden Holraum miteinander bilden.

3. Vorrichtung zur Abriegelung nach Anspruch 1, dadurch gekennzeichnet, dass die Scheibe (6) einen um 90° in Bezug auf die Scheibenebene umgebogenen Rand (6a) hat, und dass sich auf dem Boden des genannten Hohlraumes ringförmige Nutabschnitte (3f, 4f) befinden, die eine ringfömige Nut zur Aufnahme des umgebogenen Scheibenrandes (6a) miteinander bilden.

4. Vorrichtung zur Abriegelung nach Anspruch 1, dadurch gekennzeichnet, dass die Scheibe die Form einer rundförmigen Platte (9) hat.

5. Vorrichtung zur Abriegelung nach Anspruch 1, dadurch gekennzeichnet, dass die Scheibe (10) eine rundförmige, mit einfachen Durchbohrungen (10a) und/oder Zwillingsdurchbohrungen (10b) versehene Platte ist, wobei die Achsen der Durchbohrungen gleich weit von der Scheibenachse und voneinander entfernt sind, so dass jede Durchbohrung einen senkrechten, daran angepassten Zapfen (3g, 4g) aufnimmt, der sich aus dem Boden des in dem zylindersektorförmigen von den arm- bzw. fussförmigen Hohlraumes nach aussen erstreckt, so dass die arm- bzw. fussförmigen Glieder (3, 4) je nach deren in dem tragenden Aufbau angewendeten Anzahl unter Zwischenschieben der erforderlichen Abstandsstücke (8, 11) richtig angeordnet werden können.

6. Vorrichtung zur Abriegelung nach Anspruch 1, dadurch gekennzeichnet, dass der tragende Aufbau einen zerlegbaren Tisch ist, dessen Oberfläche von wenigstens einem solchen tragenden Aufbau unterstützt wird.

FIG.1

FIG.2

FIG.3

# FIG.4

# FIG.5a

# FIG.5b

# FIG.5c

2